# DEMANDE DE BREVET EUROPEEN

(11) **EP 0 800 026 A1**
(43) Date de publication de la demande: **08.10.1997**
(21) Numéro de dépôt: 97400038.2
(22) Date de dépôt: 08.01.1997
(51) Int. Cl.: F16H 63/18, F16H 61/28

(54) **Actionneur électrohydraulique pour la commande d'une boite de vitesses de véhicule du type à barillet d'entrée**

(30) Priorité: 04.04.1996 FR 9604258
(71) Demandeur: S.A.M.M.- Société d'Applications des Machines Motrices, F-91570 Bièvres (FR)
(72) Inventeur: Devaud, Gérard, 75015 Paris (FR)
(74) Mandataire: Martin, Jean-Paul

(57) **Abrégé**

Cet actionneur électrohydraulique comprend une paire de vérins hydrauliques (12, 13) et un basculeur (14) solidaire en rotation d'un arbre (7) d'entrée du barillet, les vérins sont disposés parallèlement entre eux de manière à pouvoir commander le basculeur en rotation pour lui faire prendre des positions angulaires prédéterminées correspondant aux vitesses choisies (MA, PM, 1, 2...) et cet actionneur comprend également des électrovannes de commande des vérins. Le basculeur (14) s'étend transversalement à l'arbre (7) et ses extrémités sont adaptées pour pouvoir coopérer avec des pistons respectifs (17, 18) des vérins (12, 13), chaque vérin comprend trois pistons coaxiaux (24, 25, 17; 26, 27, 18) et de sections différentes, disposés dans des chambres (28, 29) de sections correspondantes ménagées dans le corps (11). Cet actionneur électrohydraulique permet une commande extrêmement rapide et aisée de la sélection des vitesses pour une structure relativement simple et un coût de fabrication modéré.

## Description

La présente invention a pour objet un actionneur électrohydraulique pour la commande en rotation d'un barillet d'entrée d'une boite de vitesses de véhicule, du type de celui décrit aux figures 6 à 8 de la demande de brevet français n° 93 08 429 (2 707 359) au nom de la Société d'Applications des Machines Motrices.

L'actionneur visé par l'invention comprend un corps contenant un basculeur solidaire en rotation d'un arbre d'entrée du barillet, et des moyens de commande du basculeur en rotation comportant trois vérins hydrauliques disposés de façon à lui faire prendre les orientations angulaires souhaitées pour permettre la commande des vitesses successives.

L'invention a pour but de simplifier la structure de cet actionneur antérieur et par conséquent d'en réduire sensiblement le coût de fabrication, afin de permettre sa mise en oeuvre sur des véhicules automobiles de série.

Conformément à l'invention, lesdits moyens de commande comprennent une paire de vérins hydrauliques disposés parallèlement l'un à l'autre de manière à pouvoir commander le basculeur en rotation pour lui faire prendre des positions angulaires prédéterminées correspondant aux vitesses choisies, cet actionneur comprenant également des électrovannes de commande des vérins, et chaque vérin comprend trois pistons coaxiaux et de sections différentes, disposés dans des chambres de sections correspondantes ménagées dans le corps, le basculeur s'étendant transversalement à l'arbre et ses extrémités étant adaptées pour pouvoir coopérer avec des pistons respectifs des vérins.

Cet actionneur ne comporte que deux vérins hydrauliques au lieu de trois dans la réalisation du brevet précité, ce qui simplifie sa structure et le rend moins onéreux.

Suivant un mode de réalisation préféré, le basculeur s'étend transversalement de chaque côté de l'arbre et ses extrémités sont adaptées pour pouvoir coopérer avec des pistons respectifs des vérins, et chaque vérin comprend trois pistons coaxiaux et de sections différentes, disposées dans des chambres de sections correspondantes ménagées dans le corps.

Suivant une autre caractéristique de l'invention, chaque vérin comprend une chambre hydraulique subdivisée en deux compartiments coaxiaux de sections différentes, le premier compartiment, de section supérieure à celle du second compartiment et réalisé du côté le plus éloigné du basculeur, contient un premier piston déplaçable jusqu'à une butée d'arrêt délimitant les deux compartiments, et le second compartiment contient un second et un troisième pistons dont le troisième est monté coulissant à l'intérieur du second piston et coopère avec une extrémité correspondante du basculeur.

D'autres particularités et avantages de l'invention apparaîtront au cours de la description qui va suivre, faite en référence aux dessins annexés qui en illustrent une forme de réalisation à titre d'exemple non limitatif.

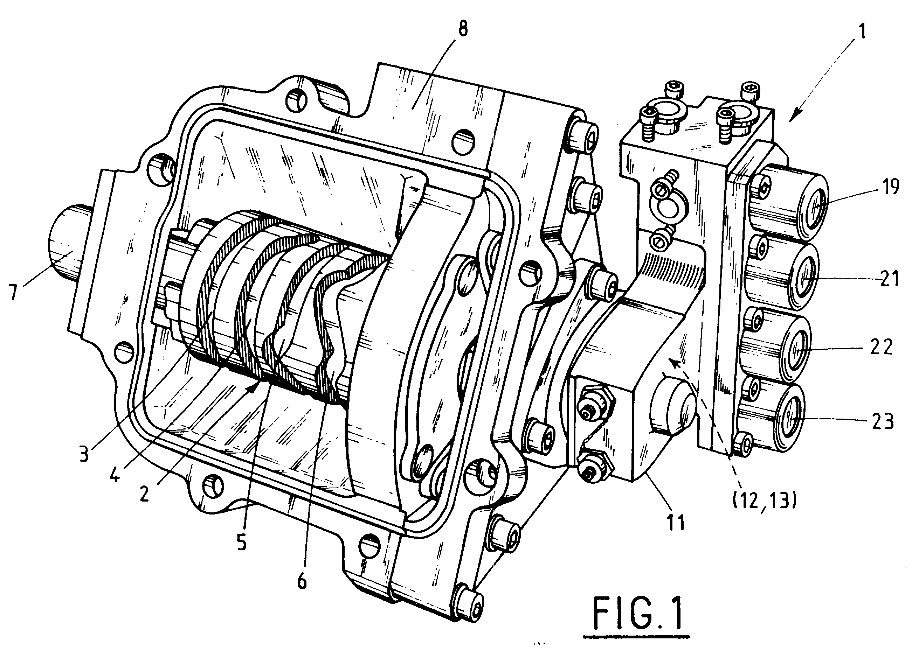

La figure 1 est une vue en perspective, d'une forme de réalisation de l'actionneur électrohydraulique visé par l'invention et du barillet d'entrée d'une boite de vitesses de véhicule commandée par cet actionneur.

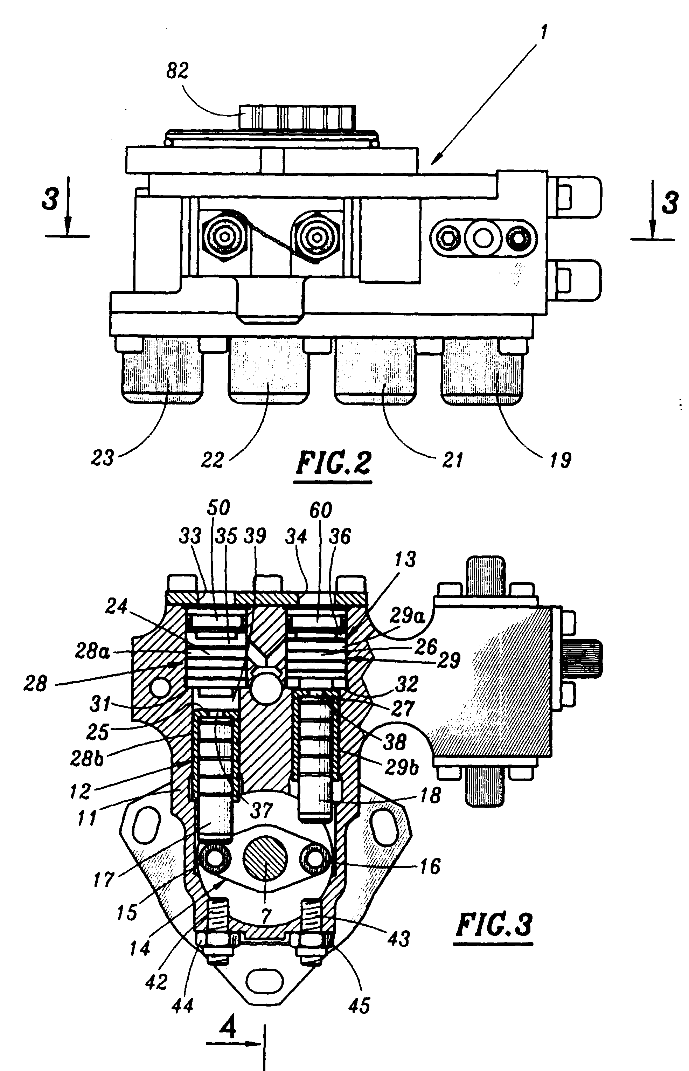

La figure 2 est une vue en élévation latérale partielle de l'actionneur de la figure 1.
La figure 3 est une vue en coupe suivant 3/3 de la figure 2;
La figure 4 est une vue en coupe partielle suivant le plan 4 de la figure 3.
La figure 5 est une vue d'un mode de réalisation du circuit hydraulique de commande des deux vérins et du basculeur de l'actionneur des figures 1 à 4.

L'actionneur électrohydraulique 1 représenté aux dessins est adapté pour la commande en rotation d'un barillet 2 d'entrée d'une boite de vitesses de véhicule (non représentée), une série de gorges 3, 4, 5, 6... convenablement profilées étant usinées dans la surface du barillet 2 pour coopérer avec des fourchettes non représentées, associées à chaque vitesse de manière connue en soi.

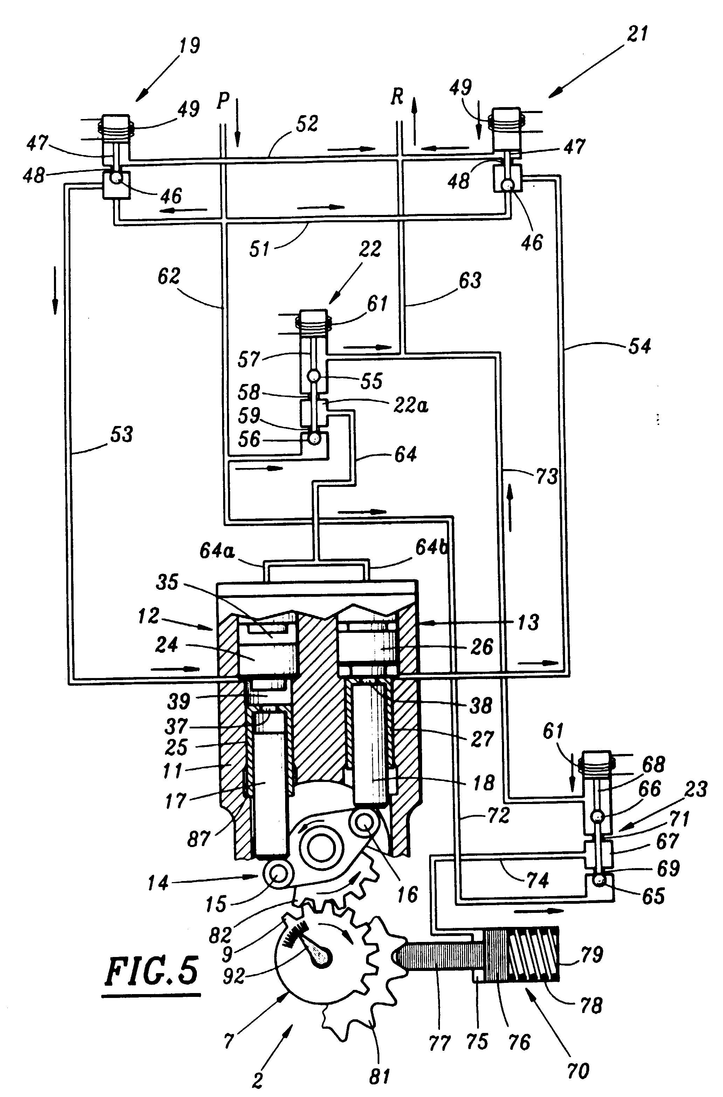

Le barillet 2 est monté sur un arbre central 7 porté à ses extrémités par un châssis 8 et dont une extrémité, contiguë à l'actionneur 1, est équipée d'un secteur denté 9 (figure 5) en prise avec un organe de sortie de l'actionneur 1.

Celui-ci comprend un corps 11 contenant une paire de vérins hydrauliques 12, 13 et un basculeur 14 solidaire en rotation de l'arbre 7. Les deux vérins 12, 13 sont disposés parallèlement entre eux d'un même côté du basculeur 14, lequel est constitué par une pièce allongée s'étendant de part et d'autre de l'extrémité de l'arbre 7. Le basculeur 14 est pourvu de deux plots transversaux respectifs 15, 16 pouvant coopérer avec des pistons correspondants 17, 18 des vérins 12, 13, qui peuvent ainsi commander le basculeur 14 en rotation pour lui faire prendre des positions angulaires déterminées correspondant aux vitesses choisies.

Les vérins 12, 13 font partie d'un circuit hydraulique comportant quatre électrovannes 19, 21, 22, 23 et qui sera décrit en détail ci-après.

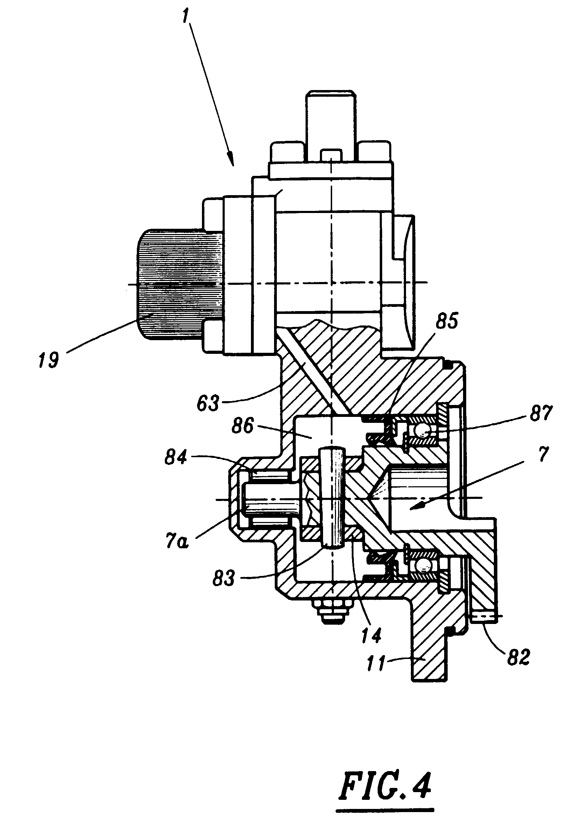

Chaque vérin 12, 13 comprend trois pistons coaxiaux, à savoir respectivement pour le vérin 12 : les pistons 24, 25 et 17 qui coopèrent avec le plot 15, et pour le vérin 13, les pistons 26, 27 et 18, ce dernier pouvant coopérer avec le plot 16 du basculeur 14. Les pistons 24, 25, 17 et 26, 27, 18 ont des sections décroissantes du premier piston 24, 26 au troisième piston 17, 18. Dans chaque vérin 12, 13 est prévue une chambre 28, 29 subdivisée en deux compartiments respectifs 28a, 28b et 29a, 29b dont les sections correspondent aux pistons respectifs 24, 25 et 26, 27. Ces compartiments sont séparés par des épaulements annulaires 31, 32 et les premiers compartiments 28a, 29a sont réalisés du côté du vérin le plus éloigné du basculeur 14. Les premiers pistons 24 et 26 sont déplaçables sur une course délimitée par des pièces d'arrêt 50, 60 fixées sur le fond 33, 34 des compartiments respectifs 28a, 29a et les épaulements 31, 32 formant butées d'arrêt des pistons. Des chambres correspondantes 35, 36 sont donc réservées entre les pièces 50, 60. Aux figures 3 et 5, le piston 24 est en butée contre l'épaulement 31, et le piston 26 est en butée contre la pièce 60, en position haute.

Le second compartiment 28b, 29b contient le second piston 25, 27 et le troisième piston respectif 17, 18, lequel est monté coulissant à l'intérieur du second piston associé 25, 27. Le second piston 25, 27 est tubulaire, ouvert dans la direction du basculeur 14 afin de permettre le coulissement du piston intérieur respectif 17, 18 et comporte, du côté opposé, un fond percé d'une ouverture centrale 37, 38 mettant en communication l'intérieur dudit piston 25, 27 avec une chambre intermédiaire : à la figure 3 seule la chambre intermédiaire 39 du piston 25 est visible en raison de l'écartement entre les pistons 25 et 24, alors que les pistons 26 et 27 sont en contact mutuel, le piston 27 étant en fin de course contre le piston 26.

Ces chambres intermédiaires telles que 39 sont donc délimitées par les pistons respectifs 24, 26 et les pistons tubulaires associés 25, 27.

En regard du basculeur 14, le corps 11 est équipé de deux butées 42, 43 d'arrêt en rotation du basculeur 14, ces butées étant agencées pour pouvoir coopérer respectivement avec les plots 15 et 16. Lorsque le piston 17 a accompli sa course maximum et placé le plot 15 en appui contre la butée d'arrêt 42, le basculeur 14 a tourné, ainsi que l'arbre 7, et le barillet 2, d'un angle tel que le plot 16 est en position haute, le piston correspondant 18 et le piston tubulaire 27 étant dans leur position haute extrême (figure 5).

Les butées 42, 43 peuvent être constituées par exemple par des tiges filetées réglables, associées à des écrous 44, 45 comme illustré à la figure 3.

On décrira maintenant le circuit hydraulique associé aux vérins 12 et 13 et illustré à la figure 5.

Les deux électrovannes 19 et 21 sont du type à une seule bille obturatrice 46 fixée à l'extrémité d'un noyau 47 et déplaçable longitudinalement de part et d'autre d'un siège 48, selon que l'enroulement 49 de l'électrovanne est excité ou non. Dans la position représentée à la figure 5, l'électrovanne 19 est dans son état désexcité de sorte que sa bille 46 est appliquée sur le siège 48 qu'elle obture, tandis que l'électrovanne 21 est dans son état excité, l'enroulement 49 étant parcouru par un courant et la bille 46 ainsi que le noyau 47 étant repoussés du siège 48 de sorte que l'électrovanne est ouverte.

Les électrovannes 19, 21 sont reliées entre elles par deux conduits 51 et 52 dont l'un 51 est alimenté en fluide hydraulique sous pression P et l'autre 52 communique avec le retour R à la bâche. En outre chaque électrovanne 19, 21 et reliée par une canalisation correspondante 53, 54 à la chambre intermédiaire 39 du vérin associé 12, 13.

Le circuit hydraulique comprend une troisième électrovanne 22, du type à deux billes obturatrices 55, 56 solidaires d'un noyau 57 et déplaçables avec celui-ci de part et d'autre de deux sièges respectifs 58, 59 selon que l'enroulement 61 est excité ou non, les deux sièges 58, 59 étant séparés par une chambre intermédiaire 22a. Dans la position représentée à la figure 5, l'électrovanne 22 n'est pas excitée et la bille 56 la plus éloignée de l'enroulement 61 est appliquée sur son siège 59 tandis que la bille 55 est écartée de son siège 58.

L'électrovanne 22 est reliée d'une part via son compartiment contenant la bille 56 à un conduit 62 d'alimentation en fluide hydraulique sous pression P et via son compartiment contenant la bille 55, à un conduit 63 de retour à la bâche R. En outre l'électrovanne 22 est reliée par sa chambre intermédiaire 22a à une canalisation d'utilisation 64 débouchant dans les chambres 35, 36 par l'intérieur des pièces d'arrêt 50, 60. A cet effet la canalisation 64 se subdivise en deux dérivations 64a, 64b qui débouchent dans les chambres associées 35, 36.

L'excitation de la troisième électrovanne 22 écarte la bille 56 de son siège et applique au contraire la bille 55 sur son siège 58, ce qui met en communication, via le compartiment intermédiaire 22a, le conduit 62 de fluide sous pression P et le conduit d'utilisation 64. Par contre à l'état non excité, la bille 56 est appliquée sur son siège 59 et la bille 55 est écartée de son siège 58, de sorte que l'électrovanne 22 met alors en communication (figure 5) le conduit d'utilisation 64 et le conduit 63 de retour à la bâche R.

Le circuit hydraulique est complété par la quatrième électrovanne 23, qui est du même type que l'électrovanne 22, donc à deux billes 65, 66 fixées à un noyau 68 pouvant être déplacé par excitation de l'enroulement 61. Le noyau 68 traverse un compartiment intermédiaire 67 interposé entre les deux compartiments respectifs contenant les billes 65, 66, et aux extrémités duquel sont formés les sièges 69, 71 des billes 65, 66.

L'électrovanne 23 est reliée par une canalisation 72 au conduit 62 d'alimentation en fluide sous pression P et, par une canalisation 73, au conduit 63 de retour à la bâche R; les canalisations 72, 73 débouchent dans les compartiments respectifs des billes 65, 66. D'autre part le compartiment intermédiaire 67 de l'électrovanne 23 est relié par une canalisation d'utilisation 74 à la chambre 75 d'un vérin 70 de "débillage" dont le piston 76, prolongé par une tige 77, est constamment sollicité par un organe élastique 78 intérieur au cylindre 79 du vérin 76. Cet organe 78 peut être constitué comme représenté par un ressort hélicoïdal prenant appui sur le fond du cylindre 79 et qui pousse le piston 76 ainsi que la tige 77 de façon que celle-ci tende à rester constamment en prise dans une denture 81 du barillet 2 et solidaire en rotation de ce dernier. La canalisation 74 d'utilisation de l'électrovanne 23 débouche dans la chambre 75 réservée dans l'extrémité du cylindre la plus proche de la denture 81, de sorte que lorsque du fluide sous pression est envoyé dans cette chambre 75, la pression est exercée sur le piston 76 à l'encontre de la force antagoniste de rappel du ressort 78, jusqu'à ce que cette pression soit supérieure à cette force de rappel, ce qui écarte alors l'extrémité de la tige 77 de la denture 81.

Lorsque l'électrovanne 23 est désexcitée, comme représenté à la figure 5, la bille 65 est appliquée sur son siège 69 et la bille 66 est écartée de son siège 71, de sorte que la canalisation d'utilisation 74 communique, via le compartiment intermédiaire 67, avec la canalisation 73 de retour à la bâche R et que la chambre 75 n'est donc pas sous pression. Dans ce cas le ressort 68 maintient l'extrémité de la tige 77 en prise avec la denture 81. Inversement lorsque l'électrovanne 23 est dans son état excité, la bille 66 est appliquée sur son siège 71, la bille 65 est écartée de son siège 69, de sorte que la canalisation 74 communique avec les conduits 72, 62 de fluide sous pression P et que la chambre 75 est sous pression, ce qui écarte la tige 77 de la denture 81 dès que la pression est suffisante.

Le basculeur 14 est solidaire d'un secteur denté 82 (figure 5) maintenu constamment en prise avec la denture 9 solidaire de l'arbre 7 du barillet 2.

La position angulaire du barillet 2 peut être contrôlée par un potentiomètre rotatif 92 (figure 5), associé de manière connue en soi à l'arbre 7.

Ce potentiomètre 92 constitue un détecteur de compte-rendu de position angulaire du barillet 2.

Le basculeur 14 est solidarisé avec le bout de l'arbre 7 (Fig.4) par une goupille transversale 83, le bout d'arbre 7a prenant appui dans le corps 11 par des roulements à aiguilles 84. Un joint d'étanchéité 85 est interposé entre l'arbre 7 et la paroi de la chambre 86 intérieure au corps 11 dans laquelle est engagée l'extrémité de l'arbre 7, en appui sur des roulements à billes 87.

Le fonctionnement de l'actionneur électrohydraulique qui vient d'être décrit est le suivant.

Les positions angulaires du basculeur 14 et donc de l'arbre 7 ainsi que du barillet 2, et par conséquent le passage des vitesses correspondantes de la boite par les fourchettes associées au barillet 2 de manière connue en soi, sont déterminées uniquement par la mise en butée des pistons 17, 18 contre les plots respectifs 15, 16 du basculeur 14.

Si par exemple, comme illustré à la figure 5, les électrovannes 19 et 22 sont à l'état désexcité et l'électrovanne 21 est excitée, du fluide sous pression P passe par l'électrovanne 19 et la canalisation d'utilisation associée 53, dans la chambre intermédiaire 39 qui est ainsi mise sous pression. Simultanément les chambres 35, 36 sont mises en communication avec la canalisation 63 de retour à la bâche par la canalisation 64 et l'électrovanne 22, dont la bille 55 est écartée de son siège 58. De ce fait, les pistons 24, 26 sont poussés en butée contre les pièces d'arrêt 50, 60 de leurs chambres, tandis que le piston 25 coulisse jusqu'à venir en butée contre un épaulement 87 du corps 11, et que le fluide sous pression, traversant le passage 37, remplit la chambre intérieure au piston 25.

Le piston 17 intérieur à ce dernier est donc poussé contre le plot 15 jusqu'à ce que ce dernier soit arrêté par la butée 42, le basculeur 14 ayant tourné jusqu'à sa position représentée à la figure 5, en entraînant l'arbre 7. Corrélativement, le piston 18 est repoussé par le plot 16 dans le piston 27, vient en fin de course en butée contre le piston 26 lui même en butée de fin de course contre la pièce 60.

La rotation du basculeur 14 entraîne celle de l'arbre 7 et du barillet 2, via les dentures 82 et 9.

Chaque fois que les vérins 12, 13 sont actionnés pour commander un changement de vitesses, l'électrovanne 23 est excitée de façon à mettre en communication la canalisation d'utilisation 74 avec les conduits 72, 62 de fluide de sous pression P. Ceci permet pendant le passage de la vitesse correspondante de retirer la tige 77 de la denture 81. Le vérin de débillage 78 est ainsi actionné à chaque passage de vitesse, ce qui présente un double avantage : on évite ainsi une usure prématurée de la denture 81 du barillet 2, et d'autre part on gagne encore en rapidité de passage des vitesses, ou encore on peut réduire la section des vérins 12, 13.

Ces derniers peuvent être commandés de telle sorte que les pistons correspondants ne parcourent qu'une demi course, position dans laquelle les fourchettes sont également à demi course.

Les différents états pouvant être pris par les quatre électrovannes 19, 21, 22, 23, dans le sens de la montée des vitesses et dans celui de la descente des vitesses, sont représentés sur la table de vérité ci-après.

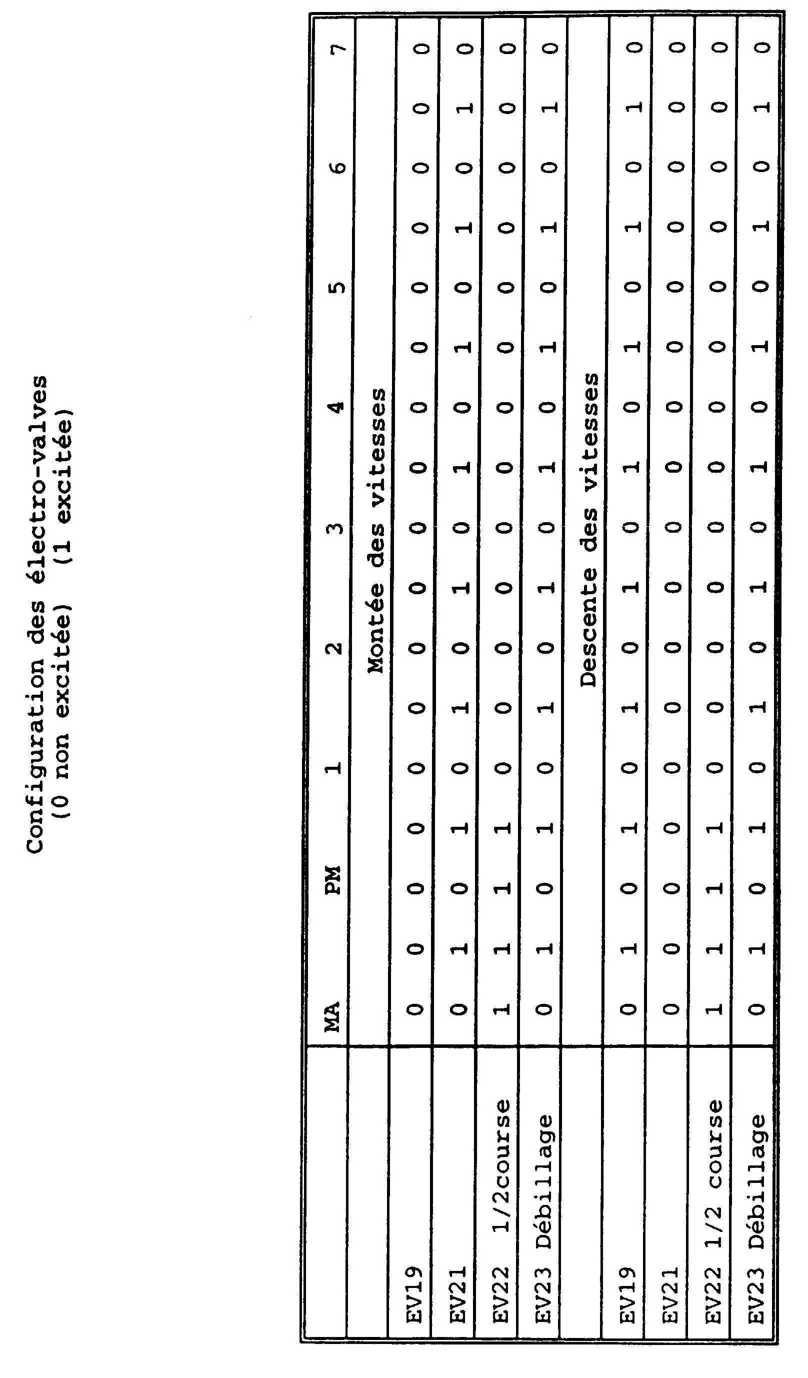

Sur celle-ci en regard de chaque électrovanne référencée "EV19", "EV21", "EV22", "EV24" et pour la montée ainsi que la descente des vitesses, sont représentés, pour la marche arrière MA, le point mort PM, et les vitesses 1, 2, 3, 4, 5, 6, 7, les différents états des électrovannes : 0 est l'état désexcité et 1 est l'état excité. On remarque qu'à chaque passage de vitesse, l'électrovanne 23 de débillage est excitée (état 1) afin de commander le retrait de la tige 77 de la denture 81, ce qui facilite et accélère le passage d'une vitesse à l'autre; avant et après chaque passage elle est donc à l'état désexcité (0), de sorte que la tige 77 revient en prise avec la denture 81 et assure le maintien de la position angulaire du barillet 7 pour la vitesse choisie.

L'enchaînement de chaque vitesse selon cette table de vérité s'effectue après compte rendu de position au moyen du potentiomètre rotatif 92. En revanche une coupure de ce compte rendu n'engendre pas de passage intempestif vers d'autres vitesses. Le détecteur de position constitué par le potentiomètre 92 a été représenté monté coaxial à l'axe du barillet 2.

Grâce à cet actionneur, il est possible de commander les passages de vitesses de manière extrêmement rapide, avec une structure plus simple et donc un coût de fabrication moindre que ceux de l'actionneur du brevet antérieur précité.

## Revendications

1. Actionneur électrohydraulique pour la commande en rotation d'un barillet (2) d'entrée d'une boite de vitesses de véhicule, comprenant un corps (11) contenant un basculeur (14) solidaire en rotation d'un arbre (7) d'entrée du barillet, et des moyens de commande du basculeur en rotation, caractérisé en ce que lesdits moyens de commande comprennent une paire de vérins hydrauliques (12, 13) disposés parallèlement l'un à l'autre de manière à pouvoir commander le basculeur en rotation pour lui faire prendre des positions angulaires prédéterminées correspondant aux vitesses choisies (MA, PM, 1, 2...), cet actionneur comprenant également des électrovannes (19, 21, 22, 23) de commande des vérins, et en ce que chaque vérin comprend trois pistons coaxiaux (24, 25, 17; 26, 27, 18) et de sections différentes, disposés dans des chambres (28, 29) de sections correspondantes ménagées dans le corps (11), le basculeur (14) s'étendant transversalement à l'arbre (7) et ses extrémités étant adaptées pour pouvoir coopérer avec des pistons respectifs (17, 18) des vérins (12, 13).

2. Actionneur selon la revendication 1, caractérisé en ce que chaque vérin (12, 13) comprend une chambre hydraulique (28, 29) subdivisée en deux compartiments coaxiaux (28a, 28b; 29a, 29b) de sections différentes, en ce que le premier compartiment (28a, 29a), de section supérieure à celle du second compartiment (28b, 29b), est réalisé du côté le plus éloigné du basculeur (14), contient un premier piston (24, 26) déplaçable jusqu'à une butée d'arrêt (31, 32) délimitant les deux compartiments, et en ce que le second compartiment (28b,29b) contient un second (25, 27) et un troisième pistons (17, 18) dont le troisième est monté coulissant à l'intérieur du second et coopère avec une extrémité correspondante (16, 16) du basculeur (14).

3. Actionneur selon la revendication 2, caractérisé en ce que ledit second piston (25, 27) du second compartiment (28b, 29b) est tubulaire et comporte un fond percé d'une ouverture (37, 38) mettant en communication l'intérieur dudit piston avec une chambre intermédiaire (39) délimitée par lesdits premier piston (24, 26) et second piston tubulaire (25, 27), et en ce que l'extrémité de ce dernier opposée à son fond est ouverte pour permettre le coulissement du troisième piston (17, 18) dans le second piston (25, 27).

4. Actionneur selon la revendication 3, caractérisé en ce qu'il comprend une première et une seconde électrovannes (19, 21) du type à une seule bille obturatrice (46) reliées entre elles par deux conduits dont l'un (51) est alimenté en fluide hydraulique sous pression et l'autre (52) communique avec le retour à la bâche (R), et en ce que chacune de ces électrovannes est en outre reliée par des conduits d'utilisation (53, 54) à ladite chambre intermédiaire (39) du vérin associé (12, 13).

5. Actionneur selon la revendication 4, caractérisé en ce qu'il est pourvu d'une troisième électrovanne (22) reliée d'une part à un conduit (62) d'alimentation en fluide hydraulique sous pression (P) et à un conduit (63) de retour à la bâche (R), et d'autre part à une canalisation d'utilisation (64) débouchant dans les chambres (35, 36) réservées entre les fonds (33, 34) et les premiers pistons (24, 26) de chaque vérin (12, 13), cette troisième électrovanne étant pourvue d'une paire de billes (55, 56) fixées à un noyau mobile (57) et associées à deux sièges correspondants (58, 59) de telle sorte que l'excitation de cette troisième électrovanne met en communication les conduits sous pression (62) et d'utilisation (64), tandis qu'à l'état non excité l'électrovanne met en communication les conduits d'utilisation (64) et de retour à la bâche (63).

6. Actionneur selon la revendication 5, caractérisé en ce qu'il comporte une quatrième électrovanne (23) reliée d'une part au conduit (62) d'alimentation en fluide sous pression (P) et au conduit (73, 63) de retour à la bâche, et d'autre part à un vérin (70) de débillage dont le piston (76) est constamment sollicité par un organe élastique (78) contre une denture (81) solidaire en rotation du barillet (2), en ce que ladite quatrième électrovanne est pourvue d'une paire de billes (65, 66) solidaires d'un noyau mobile (68) et associées à deux sièges correspondants (69, 71) d'un compartiment (67) traversé par le noyau mobile, ce compartiment communiquant avec une canalisation d'utilisation (74) qui débouche dans une chambre (75) du vérin de débillage formée du côté du piston opposé à l'organe élastique de rappel, et en ce que ladite canalisation d'utilisation (74) et le compartiment (67) communiquent avec l'alimentation en fluide sous pression (72, 62) lorsque l'électrovanne est excitée, et avec le retour à la bâche (R) lorsque l'électrovanne est désexcitée.

7. Actionneur selon l'une quelconque des revendications 1 à 6, caractérisé en ce que le corps (11) est muni de butées (42, 43) d'arrêt en rotation du basculeur (14), associées respectivement à chaque extrémité (15, 16) dudit basculeur et déterminant les fins de course des pistons (17, 18) des vérins (12, 13).

8. Actionneur selon la revendication 7, caractérisé en ce que le basculeur (14) est solidaire d'un secteur denté (82) en prise avec une roue dentée (9) elle-même solidaire en rotation du barillet (2).
